Europäisches Patentamt

European Patent Office

Office européen des brevets

(11) Veröffentlichungsnummer: **0 212 389 B1**

(12) **EUROPÄISCHE PATENTSCHRIFT**

(45) Veröffentlichungstag der Patentschrift: **29.07.92**

(21) Anmeldenummer: **86110642.5**

(22) Anmeldetag: **01.08.86**

(51) Int. Cl.⁵: **H04N 5/44**, H04N 5/76

(54) **Fernsehempfänger.**

(30) Priorität: **09.08.85 DE 3528643**

(43) Veröffentlichungstag der Anmeldung:
**04.03.87 Patentblatt 87/10**

(45) Bekanntmachung des Hinweises auf die
Patenterteilung:
**29.07.92 Patentblatt 92/31**

(84) Benannte Vertragsstaaten:
**AT BE CH DE FR GB IT LI LU NL SE**

(56) Entgegenhaltungen:
DE-A- 2 547 360
DE-A- 3 146 395
DE-A- 3 222 806
US-A- 4 031 548

(73) Patentinhaber: **Deutsche Thomson-Brandt GmbH**
**Hermann-Schwer-Strasse 3 Postfach 1307**
**W-7730 Villingen-Schwenningen(DE)**

(72) Erfinder: **Scholz, Werner, Dipl.-Ing.**
**Osterstrasse 20**
**W-3007 Gehrden(DE)**

(74) Vertreter: **Einsel, Robert, Dipl.-Ing.**
**Deutsche Thomson-Brandt GmbH Patent-**
**und Lizenzabteilung Göttinger Chaussee 76**
**W-3000 Hannover 91(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Es ist bekannt, Fernsehempfänger mit einem getrennten Videorecorder so zusammenzuschalten, daß mit dem Fernsehempfänger wiedergegebene Sendungen oder auch Sendungen anderer Kanäle aufgezeichnet und aufgezeichnete Sendungen wiedergegeben werden können. Dabei ist es bekannt, den Videorecorder mit sogenannten Timern zu programmieren, so daß der Videorecorder zu voreingestellter Woche, Tag und Datum selbsttätig eine Sendung eines bestimmten Kanals aufnimmt.

In der Praxis kommt es häufig vor, daß während der Wiedergabe einer laufenden Fernsehsendung unerwartet eine Darbietung oder ein Beitrag kommt, den der Bedienende gerne aufzeichnen möchte. In diesem Fall muß der Bedienende zunächst eine freie Kassette heraussuchen, in den Videorecorder einlegen, auf die gewünschte Bandstelle für den Anfang der Aufzeichnung vorspulen und dann die für die Aufnahme benötigten Tasten betätigen. Dieser Vorgang dauer jedoch so lange, daß inzwischen ein wesentlicher Teil des gewünschten Beitrages oder der ganze Beitrag abgelaufen ist.

Es ist zwar denkbar, einen Videorecorder ständig für eine schnelle Aufnahme bereitzuhalten, in den eine Kassette mit der gewünschten Bandstellung eingelegt ist. Durch diese Lösung ist jedoch der Videorecorder für andere Zwecke blockiert. Außerdem vergeht immer noch eine gewisse Zeit zwischen dem Entschluß, eine Sendung aufzunehmen, und dem Beginn des Aufnahmevorganges. Außerdem kann der Fall eintreten, daß das eingelegte Magnetband für die Aufzeichnung der gewünschten Sendung nicht mehr ausreicht, weil z.B. schon vorher mehrere Darbietungen auf dem Magnetband aufgezeichnet sind.

Es ist auch ein Fernsehempfänger bekannt (DE-OS 31 46 395), der einen Empfangsteil, eine Bildwiedergabeeinrichtung und eine mit dem Empfänger verbundene Aufzeichnungseinrichtung für Videosignale aufweist. Diese Kombination hat den Zweck, verschiedene konstruktive und elektrische Bauteile einzusparen und die Handhabung zu vereinfachen. Das funktionelle Zusammenarbeiten von Videorecorder und Fernsehempfänger und insbesondere die Verzögerung beim Einleiten einer Aufnahme werden durch diese Lösung nicht beeinflußt.

Der Erfindung liegt die Aufgabe zugrunde, einen Fernsehempfänger so auszubilden, daß auch unerwartet und plötzlich auftretende Darbietungen vollständig, also ohne jeden Verlust am Anfang oder am Ende der Darbietung, aufgezeichnet werden.

Diese Aufgabe wird durch die im Anspruch 1 beschriebene Erfindung gelöst. Vorteilhafte Weiterbildungen der Erfindung sind in den Unteransprüchen angegeben.

Es ist auch ein Gerät zur reinen Wiedergabe von Bildaufzeichnungen bekannt (DE-OS 25 47 360), das einen Kassettenrecorder mit Endloskassette und einem aufgesetzten Monitor enthält. Dieses Gerät dient jedoch nur dazu, eine bestimmte Bild- und Tonaufzeichnung wiederholt wiederzugeben, ohne daß dabei Pausen durch Rückspulen des Aufzeichnungsträgers entstehen. Die Aufgabe, unerwartet und plötzlich auftretende Darbietungen ohne Verlust am Anfang oder am Ende der Darbietung aufzuzeichnen, wird dort nicht behandelt und auch nicht gelöst.

Diese Aufgabe wird durch die imAnspruch 1 beschriebene Erfindung gelöst. Vorteilhafte Weiterbildungen der Erfindung sind in den Unteransprüchen beschrieben.

Durch die erfindungsgemäße Lösung ergeben sich mehrere Vorteile. Da die quasi-prophylaktische Aufnahme zu Beginn der unerwarteten oder plötzlich auftretenden Darbietung bereits läuft, tritt bei Beginn der Aufzeichnung dieser Darbietung kein Verlust ein. Der Bedienende braucht in diesem Zeitpunkt auch nichts zu unternehmen, weil die Aufzeichnung der plötzlich auftretenden Darbietung bereits läuft. Erst am Ende der gewünschten Darbietung wird eine Taste betätigt, die den Antrieb des Aufzeichnungsträgers abschaltet, damit nicht beim nächsten Durchlauf des Endlos-Magnetbandes die gewünschte aufgezeichnete Darbietung durch eine neue Aufzeichnung wieder gelöscht wird. Während also bei bekannten Einrichtungen beim Auftreten der plötzlichen, aufzuzeichnenden Darbierung schnelle und übereilte Maßnahmen notwendig sind, ist bei der erfindungsgemäßen Lösung die einzige Maßnahme erst dann notwendig, wenn die gewünschte Sendung zu ende und bereits aufgezeichnet ist. Bei dieser Maßnahme ist auch keine Eile geboten, weil die gewünschte Aufzeichnung bereits stattgefunden hat und allenfalls noch ein Teil einer nicht gewünschten Aufzeichnung erfolgt.

Der Speicher in dem Fernsehempfänger ist mit der Schaltung des Fernsehempfängers so verknüpft, daß er zwangsläufig nur das jeweils dargestellte Programm aufzeichnet. Das hat den Vorteil, daß der Speicher nicht versehentlich auf einen falschen Sender abgestimmt sein kann, wie das bei getrennten Videorecordern häufiger vorkommt. Die während der Betrachtung eines Fernsehbildes vorgenommene Aufzeichnung kann auch dazu dienen, eine Lücke in dere Betrachtung, z.B. durch eine Störung oder einen Telefonanruf, nachträglich aufzufüllen. Wenn in einer Sendung plötzlich eine interessante oder wichtige Stelle auftritt, deren mehrfache Betrachtung erwünscht oder notwendig ist, z.B. das Erscheinen eines Verwandten oder Bekannten des Betrachters auf dem Bildschirm oder das Bild eines langgesuchten Räubers, kann durch die mitlaufende Aufnahme der entsprechende Bildausschnitt anschließend beliebig oft wiedergegeben werden. Der erfindungsgemäße Speicher ist auch billiger als ein üblicher Videorecorder, zumal er keinen HF-Empfangsteil benötigt. Durch die erfindungsgemäße Lösung werden der Gebrauchswert des Fernsehempfängers selbst sowie der eines zusätzlich vorhandenen, getrennten Videorecorders beträchtlich erhöht. Dies wird anhand der folgenden unterschiedlichen Anwendungsbeispiele näher erläutert.

1. Wenn in einer Sendung mit mehreren Kurzbeiträgen plötzlich eine interessante oder ein wichtiger Beitrag auftritt, kann dieser nach Ablauf durch Abschalten des Speichers festgegehalten und anschließend beliebig oft wiedergegeben werden. Das ist wichtig, wenn eine mehrfache Betrachtung des Bildausschnittes notwendig ist, die erste Betrachtung nicht mit der notwendigen Sorgfalt erfolgte oder der betreffende Bildausschnitt mehreren Personen nachher gezeigt werden soll.

2. Es sei angenommen, daß der Betrachter einen Spielfilm sieht, der an sich auf einem getrennten Videorecorder nicht aufgezeichnet werden soll. Nach ca. 15 Minuten entschließt sich der Betrachter, den Spielfilm doch aufzuzeichnen. Der im Fernsehempfänger erfindungsgemäß enthaltene Recorder hat dafür im allgemeinen keine ausreichende Spieldauer. Der Betrachter kann aber jetzt in aller Ruhe einen Videorecorder für die Aufzeichnung des Spielfilms vorbereiten und dann einschalten. Sobald der Videorecorder die Aufzeichnung übernimmt, kann der Speicher im Fernsehempfänger abgeschaltet werden. Dann ist zwar der erste Teil des Spielfilms auf dem internen Speicher und der letzte Teil auf dem externen Videorecorder aufgezeichnet. Insgesamt ist aber kein Abschnitt des Spielfilms verlorengegangen. Die beiden Abschnitte können nachher durch Überspielen oder Schneiden zusammengefügt werden. Um das zwischengespeicherte Signal später an richtiger Stelle einfügen zu können, ist es zweckmäßig, den Videorecorder vor dem Start der bereits verstrichenen Spielzeit entsprechend vorlaufen zu lassen.

3. Es ist auch möglich, mit dem erfindungsgemäßen Speicher eine Überspielung z.B. von einer VHS-Kassette auf eine andere VHS-Kassette vorzunehmen, wozu bisher zwei Videorecorder notwendig waren. Zu diesem Zweck wird die Mutterkassette in den einzigen Videorecorder eingelegt und ggf. teilweise auf den Speicher im Fernsehempfänger überspielt. Anschließend wird die Mutterkassette herausgenommen, eine freie Kassette in den Videorecorder eingelegt und der Abschnitt des Filmes wieder von dem Speicher im Fernsehempfänger auf die Kassette zurückgespielt. Diese Überspielung ist im allgemeinen immer nur für Teile eines Spielfilms möglich, weil die Spieldauer des Speichers des Fernsehempfängers meist kleiner ist als die einer Kassette in einem externen Videorecorder. Es ist aber möglich, auf diese Weise eine vollständige Überspielung ohne die Notwendigkeit von zwei Videorecordern durchzuführen.

4. Im allgemeinen sind auf dem Speicher im Fernsehempfänger einzelne kurze Beiträge gespeichert. Diese können dann anschließend im Sinne einer Archivierung oder Sortierung nach bestimmten Themen mit einem externen Videorecorder auf ein normales Videoband überspielt werden.

Ein Ausführungsbeispiel der Erfindung wird im folgenden anhand der Zeichnung erläutert. Darin zeigen

Fig. 1　　ein Prinzipschaltbild für das Zusammenwirken zwischen einem Fernsehempfänger mit dem erfindungsgemäßen Speicher, einer Fernbedieneinheit für die Bedienung und einem externen Videorecorder und

Fig. 2　　einen Ausschnitt aus dem Endlos-Magnetband.

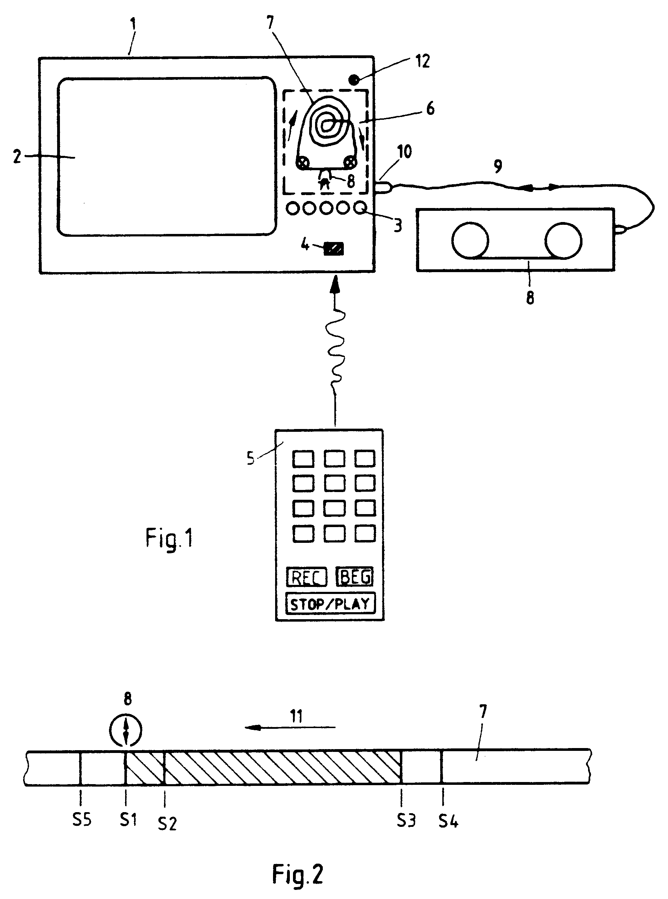

Fig. 1 zeigt einen Fernsehempfänger 1 mit der Bildröhre 2, den üblichen Bedien- und Anzeigeelementen 3 sowie einem Infrarot-Empfänger 4 für die Fernbedieneinheit 5. In den Fernsehempfänger 1 ist zusätzlich das Aufzeichnungsgerät 6 eingebaut, das mit dem Endlos-Magnetband 7 und dem Aufnahme/Wiedergabe-Magnetkopf 8 arbeitet. Das Magnetband 7 läuft dabei stets nur in der dargestellten Richtung an dem Magnetkopf 8 vorbei. Intern ist das Aufzeichnungsgerät 6 so mit der Schaltung des Fernsehempfängers verbunden, daß es das Signal des jeweils auf der Bildröhre 2 dargestellten Bildes einschließlich Ton aufzeichnen kann. Die Funktionen des Aufzeichnungsgerätes 6 sind von der Fernbedieneinheit 5 steuerbar ebenso wie die üblicherweise fernbedienbaren Funktionen des Fernsehempfängers 1. An die Buchse 10 des Fernsehempfängers 1 ist ein üblicher Videorecorder 8 angeschlossen, der über die Leitung 9 einerseits das auf dem Aufzeichnungsgerät 6 aufgezeichnete Signal zwecks Aufzeichnung empfangen und andererseits das aufgezeichnete Signal zur Bildwiedergabe oder zur Aufzeichnung mit dem Aufzeichnungsgerät 6 dem Empfänger 1 zuführen kann.

Das Endlos-Magnetband 7 befindet sich in einer austauschbaren Kassette. Je nach Anwendungsfall kann eine Kassette mit unterschiedlicher Bandlänge in den Fernsehempfänger 1 eingelegt werden. Derartige, im Stand der Technik bekannte Endlosband-Kassetten sind im allgemeinen nur für Vorlauf, also nur für Transport in einer Richtung geeignet.

Es ist vorteilhaft, wenn während des Schnellaufes des Magnetbandes 7 bestimmte Bandstellen automatisch aufgefunden werden können, damit z.B. der Beginn einer gewünschten Aufzeichnung schnell und bequem wiedergefunden werden kann. Zu diesem Zweck ist das Magnetband 7 mit einer optisch lesbaren Markierung versehen, die sich vorzugsweise an der Klebestelle des Bandes 7 befindet. Wenn diese Marke einen Fototransistor passiert, wird jedesmal ein im Aufzeichnungsgerät 6 vorgesehener Bandzähler auf null gesetzt. Der Inhalt des Zählers ist dann stets eine zuverlässige Information über den Bandstand.

Für die Bedienung des Aufzeichnungsgerätes 6 sind in der Fernbedieneinheit 5 drei Tasten vorgesehen, die mit REC (Recording), BEG (Beginn) und STOP/PLAY, (Bandstillstand/Wiedergabe) bezeichnet sind. Mit der Taste REC wird das Aufzeichnungsgerät 6 für Aufnahme eingeschaltet, so daß das Magnetband 7 mit konstanter Geschwindigkeit an dem Magnetkopf 8 vorbeigeführt wird. Die jeweils auf dem Bildschirm 2 dargestellte Sendung wird dann aufgezeichnet. Wenn das Magnetband 6 eine Laufdauer von z.B. 30 Minuten hat, wird jede Aufzeichnung nach 30 Minuten durch die folgende Aufzeichnung wieder gelöscht. Es sind also stets die letzten 30 Minuten der laufenden Fernsehsendung aufgezeichnet. Dieser Betriebszustand wird durch eine bei Betätigung der Taste REC aktivierte Anzeigelampe 12 angezeigt.

Die Taste BEG wird während er Aufzeichnung betätigt, wenn der Betrachter denBeginn einer interessanten oder wichtigen Sendung erkennt. Der gerade vorhandene Bandstand wird in einem digitalen Speicher abgelegt, damit der Betrachter den Beginn dieser interessanten Darbietung später gezielt wiederfinden kann. Auf diese Weise können mehrere Bandstände für verschiedene aufgezeichnete Darbietungen gespeichert werden. Falls das Band 7 bei Aufzeichnungsbetrieb einen gespeicherten Bandstand überschreitet, wird dieser wieder gelöscht. Einige Adressen vor dem Erreichen eines gespeicherten Bandstandes wird vom Fernsehempfänger 1 ein Warnsignal abgegeben, z.B. durch Blinken der Betriebsanzeige 12 oder durch ein akustisches Signal. Das Signal bedeutet, daß in Kürze ein automatischer Stop erfolgt, damit eine bereits aufgezeichnete interessante Darbietung nicht gelöscht wird. Falls der Bedienende es vorzieht, die laufende Aufzeichnung unterbrechungslos fortzusetzen, muß er erneut die REC-Taste betätigen. Die Annahme des Befehls wird bestätigt durch Beendigung des Warnsignals. Die Stop-Taste ist so ausgebildet, daß sie den Wiedergabebetrieb einschaltet, wenn sie bei stehendem Band betätigt wird. Das Einschalten des Wiedergabebetriebs ist vorrangig. Das auf dem Band 7 aufgezeichnete Programm erscheint sofort auf dem Bildschirm. Nach erneuter Betätigung der STOP/PLAY-Taste ist dann wieder das Programm, das vor der ersten Betätigung der Taste zu sehen war, auf dem Bildschirm.

Bei Wiedergabebetrieb oder stehendem Band wird durch Drücken der Taste BEG der Schnellauf zur nächsten gespeicherten Adresse ausgelöst. Das Band bleibt in einem angemessenen Abstand von z.B. 30 s vor dieser Adresse stehen. Dieser Abstand ist notwendig, weil die Betätigung der Taste BEG zu Beginn einer interessanten Darbietung im allgemeinen mit einer gewissen Verzögerung nach dem Beginn der Darbietung erfolgt. Durch Drücken der Taste BEG bei der Aufnahme werden also Markierungen bei Programmstellen gesetzt, die später im Schnellauf aufgesucht werden sollen, z.B. um eine Überspielung auf eine normale Videokassette durchzuführen. Die Wiedergabe beginnt dann genügend weit vor der Markierung, damit das aufzeichnende Gerät im richtigen Zeitpunkt gestartet werden kann.

Es kann auch ein schneller Suchlauf vorgesehen werden, der dann jederzeit mit der Stop-Taste unterbrochen werden kann. Der Schnellaufstart erfolgt immer durch Drücken der Taste BEG. Wurden mehrere Markierungen während der Aufzeichnung gesetzt, so muß die Taste BEG evtl. mehrmals betätigt werden, damit die gewünschte Bandstelle erreicht wird. Wurde keine Markierung bei der Aufzeichnung gesetzt und wird die Stop-Taste nicht betätigt, so erfolgt eine automatische Beendigung des Suchlaufs, sobald nach dem Drücken der Taste BEG ein voller Banddurchlauf durchgeführt ist. Die Unterbrechung des Abspielvorganges erfolgt je nach Bedarf mit der STOP- bzw. BEG-Taste.

Es kann sein, daß bei einem automatischen Stop nach Betätigung der Taste BEG und dem dadurch ausgelösten Schnellauf die Vorlaufzeit unerwünscht groß oder unerwünscht klein ist. Da dieser Sachverhalt während des nach dem Schnellauf eingeschalteten Abspielbetriebs festgestellt wird, ist es zweckmäßig, wenn in diesem Betriebszustand die Vorlaufzeit für die betreffende Bandstelle korrigierbar ist. Zu diesem Zweck können die zur Kanalwahl dienenden Zifferntasten der Fernbedienung benutzt werden. Im Betriebszustand "PLAY" bewirkt also eine Betätigung dieser Zifferntasten keine Veränderung des vor dem Einschalten des Betriebszustandes "PLAY" benutzten Fernsehkanals, sondern eine Einstellung der Vorlaufzeit für das automatische Aufsuchen der markierten Bandstellen.

Der Videorecorder 8 dient insbesondere zur Übernahme der auf dem Magnetband 7 zunächst gespeicherten Signale zwecks Archivierung oder Ordnung, zur üblichen Aufzeichnung einer Fernsehsendung, zur Wiedergabe einer normalen Videokassette oder zur vorübergehenden Überspielung einer Videokassette vom Recorder 8 auf das Magnetband 7 mit dem Zweck, dieses Signal anschließend wieder auf eine andere Kassette zu überspielen.

Fig. 2 zeigt im Prinzip die Wirkungsweise des Aufzeichnungsgerätes 6 gemäß Fig. 1. Das Endlos-Magnetband 7 wird an dem Videokopf 8, der vorzugsweise eine rotierende Kopftrommel für Schrägspuraufzeichnung ist, in Richtung 11 vorbeigeführt, wobei das auf dem Bildschirm 2 sichtbare Programm aufgezeichnet wird. Wenn die Stelle S1 des Magnetbandes 7 am Kopf 8 ist, beginnt eine für den Betrachter interessante Darbietung. Diese wird somit ohne jegliche Maßnahme aufgezeichnet. Wenn die Stelle S2 sich am Kopf 8 befindet, wird durch Betätigung der Taste BEG der Bandstand gespeichert, damit der Betrachter die bei S1 beginnende interessante Darbietung wiederfinden kann. Die Verzögerung zwischen S1 und S2 muß dabei berücksichtigt werden. Wenn die Stelle S3 am Kopf 8 angelangt ist, ist die interessante Darbietung beendet. Wenn die Stelle S4 am Kopf 8 angelangt ist, bedient der Betrachter die Taste STOP, sofern keine weiteren aufzeichnungswerten Darbietungen zu erwarten sind. Evtl. kann dann später erneut der Aufnahmebetrieb gestartet werden.

Wenn der Betrachter die Aufnahme erneut einleiten möchte, betätigt er wieder die Taste REC. Durch den automatischen STOP bei S5, der durch die zuvor an der Stelle S2 gespeicherte Adresse ausgelöst wird, ist sichergestellt, daß nach einem Durchlauf des Endlos-Magnetbandes 7 die Aufzeichnung von S1 bis S3 nicht wieder gelöscht wird.

Da die Möglichkeit besteht, daß der gerade laufende Programmteil vom Betrachter als wichtiger angesehen wird als das von S1 an gespeicherte Programm, wird der Betrachter, wie bereits beschrieben, kurz vor S5 von der bevorstehenden Abschaltung unterrichtet. Durch erneutes Betätigen der Taste REC kann er bewirken, daß die Aufzeichnung ohne Unterbrechung fortgesetzt wird.

Falls der Benutzer gerade nicht anwesend ist, erfolgt jedoch mit Sicherheit die automatische Abschaltung an der Stelle S5. Beim Ausschalten des Fernsehgerätes bleiben die gespeicherten Adressen und die Bandstandsinformation erhalten. Das Löschen des Adressenspeichers, jedoch nicht des Bandstandsspeichers, erfolgt z.B. durch Öffnen und Schließen des Kassettenfaches. Das Löschen des Bandstandsspeichers erfolgt erst bei Entnahme der Kassette. Nach dem Einlegen einer Kassette läuft das Band automatisch im Schnellauf, bis die Marke, die den Bandstandszähler auf null setzt, erreicht ist.

**Patentansprüche**

1. Fernsehempfänger mit einem Empfangsteil, einer Bildwiedergabeeinrichtung und einer in den Empfänger fest eingebauten Aufzeichnungseinrichtung für Videosignale, **dadurch gekennzeichnet, daß**

a) die Aufzeichnungseinrichtung ein Speicher (6) mit einer Endlos-Magnetband-Kassette ist, wobei das Endlos-Magnetband an einer Stelle eine optische oder magnetische Markierung aufweist und ein Zähler für den Bandstand vorgesehen ist,

b) die Aufzeichnungseinrichtung mit der Schaltung des Fernsehempfängers (1) so verbunden ist, daß eine Aufnahme nur des auf dem Bildschirm (2) dargebotenen Programms möglich ist,

c) außei bei Wiedergabebetrieb oder bei Stop zwangsläufig eine Aufnahme erfolgt und beim Einschalten des Wiedergabebetriebs das aufgezeichnete Programm mit Vorrang auf dem Bildschirm (2) erscheint,

d) eine Taste (BEG) vorgesehen ist, bei deren Betätigung der gerade vorhandene Bandstand in einem digitalen Speicher abgelegt wird,

e) und Mittel vorgesehen sind, die einige Adressen vor dem erneuten Erreichen des in dem Speicher abgelegten Bandstands die Abgabe eines Warnsignals und in einem zeitlichen Abstand vor dem abgelegten Bandstand einen automatischen Stop der Aufzeichnungseinrichtung auslösen.

2. Fernsehempfänger nach Anspruch 1, **dadurch gekennzeichnet,** daß am Gehäuse des Fernsehempfängers (1) eine Anzeige (12) für den eingeschalteten Aufnahmezustand des Speichers (6) vorgesehen ist.

3. Fernsehempfänger nach Anspruch 1, **dadurch gekennzeichnet,** daß der Zähler jeweils durch die Markierung auf null bzw. auf einen definierten Ausgangswert gestellt wird.

4. Fernsehempfänger nach Anspruch 1, **dadurch gekennzeichnet,** daß bei Betätigung der Taste (BEG) während der Wiedergabe oder bei stehendem Band (7) der Schnellauf bis zur nächsten gespeicherten Adresse bzw. bis zu einem Punkt, der um eine Vorlaufzeit von ca. 30 s vor dieser Adresse liegt, ausgelöst wird.

5. Fernsehempfänger nach Anspruch 1, **dadurch gekennzeichnet,** daß eine gemeinsame Bedienungstaste (STOP/PLAY) vorgesehen ist, die bei Betätigung während der Aufnahme oder der Wiedergabe den Antrieb des Aufzeichnungsträgers (7) stoppt und bei Betätigung während des Stillstandes des Aufzeichnungsträgers (7) auf Wiedergabe schaltet.

6. Fernsehempfänger nach Anspruch 1, **dadurch gekennzeichnet,** daß die Funktionen des Speichers durch eine Fernbedieneinheit (5) steuerbar sind.

7. Fernsehempfänger nach einem oder mehreren der vorhergehenden Ansprüche, **dadurch gekennzeichnet,** daß nach Einlegen einer Kassette ein automatischer Schnellauf ausgelöst wird, der durch Erreichen der Markierung, die den Bandstandszähler auf null setzt, beendet wird.

8. Fernsehempfänger nach Anspruch 1 oder 7, **dadurch gekennzeichnet,** daß die Markierung mit der Klebestelle des Endlosbandes zusammenfällt.

## Claims

1. Television receiver having a receiving section, an image reproducing device and a recording apparatus for video signals firmly built-in to the receiver, characterised in that,
    a) the recording apparatus is a memory (6) having an endless magnetic tape cassette wherein the endless magnetic tape contains an optical or magnetic marking at one position and a counter for the position of the tape is provided,
    b) the recording apparatus is so connected to the circuitry of the television receiver (1) that only a recording of the programme appearing on the screen (2) is possible,
    c) a recording inevitably occurs except in the play-back mode or when stopped and that upon switching-on of the play-back mode the recorded programme appears with priority on the screen (2),
    d) a button (BEG) is provided upon whose actuation the current position of the tape is recorded in a digital memory,
    e) and means are provided which initiate the emission of a warning signal some addresses before the re-arrival at the position of the tape stored in the memory and an automatic stop of the recording apparatus at an interval of time before the stored position of the tape.

2. Television receiver according to Claim 1, characterised in that, an indicator (12) for showing the operative recording state of the memory (6) is provided in the housing of the television receiver (1).

3. Television receiver according to Claim 1, characterised in that, by means of the marking, the counter is reset each time to zero or to a defined starting value.

4. Television receiver according to Claim 1, characterised in that, upon actuation of the button (BEG) during play-back or whilst the tape is stopped, the fast-run up to the next stored address or up to a point which is located at a forward running time of approximately 30 seconds before this address, is initiated.

5. Television receiver according to Claim 1, characterised in that, a common operating button (STOP/PLAY) is provided which, upon actuation during the recording or the play-back, stops the drive for the record carrier (7) and upon actuation while the record carrier is stopped switches-over to play-back.

6. Television receiver according to Claim 1, characterised in that, the functions of the memory are controllable by a remote control unit (5).

7. Television receiver according to any one or more of the preceding Claims, characterised in that, after insertion of a cassette, an automatic fast-running is initiated which is ended upon reaching the marking which resets the tape position counter to zero.

8. Television receiver according to Claim 1 or Claim 7, characterised in that, the marking coincides with the joint of the endless tape.

## Revendications

1. Récepteur de télévision avec une partie réceptrice, un dispositif de reproduction d'images et un dispositif d'enregistrement pour signaux vidéo intégré de manière fixe au récepteur, **caractérisé en ce** que
    a) le dispositif d'enregistrement est une mémoire (6) avec une cassette de bande magnétique sans fin, la bande magnétique sans fin présentant à un endroit un repère optique ou magnétique et un compteur étant prévu pour la position de la bande.
    b) que le dispositif d'enregistrement est relié au circuit du récepteur de télévision (1) de manière telle que seul un enregistrement du programme offert sur l'écran (2) est possible,

c) qu'à part en mode de reproduction ou qu'en mode arrêt l'enregistrement est obligatoirement effectué et que, lors de la mise en circuit du mode de reproduction, le programme enregistré apparaît avec priorité sur l'écran (2).

d) qu'une touche (BEG) est prévue avec laquelle, lorsqu'elle est actionnée, la position de la bande existante à ce moment-là est mise en mémoire dans une mémoire numérique.

e) et que des moyens sont prévus qui déclenchent l'émission d'un signal d'alarme quelques adresses avant que la position de la bande mise en mémoire dans la mémoire soit atteinte à nouveau et qui déclenchent un arrêt automatique du dispositif d'enregistrement à un certain écart dans le temps avant la position de la bande mise en mémoire.

2. Récepteur de télévision selon la revendication 1, **caractérisé en ce** qu'un affichage (12) de la mise en circuit de l'état d'enregistrement de la mémoire (6) est prévu sur le bâti du récepteur de télévision (1).

3. Récepteur de télévision selon la revendication 1, **caractérisé en ce** que le compteur est respectivement mis à zéro par le repère ou à une valeur de départ définie.

4. Récepteur de télévision selon la revendication 1, **caractérisé en ce** que, lors de l'actionnement de la touche (BEG) pendant la reproduction ou lorsque la bande (7) est immobile, la marche rapide est déclenchée jusqu'à la prochaine adresse mémorisée ou jusqu'à un point qui se situe avant cette adresse à un temps de marche avant d'environ 30 s.

5. Récepteur de télévision selon la revendication 1, **caractérisé en ce** qu'une touche de commande commune (STOP/PLAY) est prévue qui, lorsqu'elle est actionnée pendant l'enregistrement ou la reproduction. arrête l'entraînement du support d'enregistrement (7) et qui commute sur reproduction lorsqu'elle est actionnée pendant l'arrêt du support d'enregistrement (7).

6. Récepteur de télévision selon la télévision 1, **caractérisé en ce** que les fonctions de la mémoire peuvent être commandées par une unité de télécommande (5).

7. Récepteur de télévision selon l'une ou plusieurs des revendications précédentes, **caractérisé en ce** qu'après avoir mis en place une cassette, une marche rapide automatique est déclenchée qui est terminée lorsque le repère qui met le compteur de position de bande à zéro est atteint.

8. Récepteur de télévision selon la revendication 1 ou 7, **caractérisé en ce** que le repère coïncide avec l'endroit collé de la bande sans fin.

Fig.1

REC  BEG

STOP/PLAY

S5  S1  S2  S3  S4

Fig.2